# FASCICULE DE BREVET EUROPEEN

(11) **EP 0 795 276 B1**
(45) Date de publication et mention de la délivrance du brevet: **24.10.2001**
(21) Numéro de dépôt: 96103820.5
(22) Date de dépôt: 12.03.1996
(51) Int. Cl.: A23L 1/187, A23C 9/154

(54) **Procédé de préparation d'un flan au chocolat**
Verfahren zur Herstellung eines Schokoladepuddings
Process for preparing a chocolate pudding

(43) Date de publication de la demande: 17.09.1997
(73) Titulaire: SOCIETE DES PRODUITS NESTLE S.A., 1800 Vevey (CH)
(72) Inventeur: Carment, Laurent, 14130 Le Breuil-en-Auge (FR)
(74) Mandataire: Archambault, Jean

(56) Documents cités:
- FR-A- 2 094 941
- FR-A- 2 296 376
- US-A- 4 262 031
- US-A- 4 623 552
- FRUE LEITH: "Larousse Gastronomique" 1990 , MANDARIN PAPERBACKS , LONDON XP002010678 * page 381, colonne 2 - page 382, colonne 1 *

## Description

La présente invention à trait à la préparation d'un flan au chocolat cuit au four.

Pour préparer les flans cuits au four, on introduit dans un récipient, par exemple un pot de verre ou une coupelle en aluminium, une préparation composée de lait, de crème, d'oeuf entier, de sucre et d'arôme, puis on la cuit dans le récipient à température contrôlée, par exemple autour de 100° C pendant environ 45 min. On effectue cette cuisson généralement en faisant cheminer le récipient rempli dans un four à air chaud, la cuisson s'effectuant à la fois par convection par l'ambiance chaude entourant les récipients et par conduction par contact direct de la paroi interne du récipient avec la préparation à cuire.

La fabrication industrielle de ce type de dessert au chocolat pose un problème, des lors que l'on désire mettre à disposition un produit haut de gamme exempt d'additif gélifiant ou épaississant avec les mêmes qualités qu'un produit ménager, c'est-à-dire préparé comme le ferait une ménagère selon la recette traditionnelle, par exemple au bain-marie, car on observe une floculation à certains points de la préparation pour flan au contact de la paroi du récipient lors de la cuisson, ce qui rend le produit inacceptable.

Pour cette raison, la fabrication de flans au chocolat s'effectue industriellement généralement à froid en présence d'agents épaississants ou gélifiants.

La préparation ménagère d'une crème renversée au chocolat décrite, par exemple dans le Larousse Gastronomique (Mandarin Paperback, 1990) pages 381-382, comprend le prémélange de chocolat noir à du lait, la cuisson de ce prémélange, l'addition en remuant d'un mélange de sucre et d'oeufs, puis le remplissage de récipients avec cette préparation et la cuisson au bain-marie des récipients remplis dans un four pendant 30-35 min.

US-A-4 262 031 se rapporte à la préparation d'un entremets cuit sans oeufs contenant de la poudre de cacao fortement alcalinisée, du lait, un agent sucrant, un amidon non gélatinisé et un agent acidulant dont le rôle est de compenser l'alcalinité du cacao pour conduire à une gélatinisation correcte de l'amidon à la cuisson.

FR-A-2 094 941 concerne un entremets contenant du lait, des oeufs et du sucre, mais pas de chocolat, cuit sans bain-marie et dans des conditions modérées dans une première étape dans un four, puis doré en surface dans une seconde étape dans un tunnel à infra-rouges Le but de l'invention est de préparer industriellement un flan au chocolat cuit au four dont les caractéristiques organoleptiques sont semblables à celles obtenues par une préparation ménagère sans additif ni agent épaississant autre que les oeufs.

L'invention concerne donc un procédé de préparation d'un flan au chocolat,
dans lequel on prépare une base de lait, de crème, de sucre et de chocolat, on la traite thermiquement pour l'hygiéniser, on la refroidit et on y mélange des oeufs, ce qui constitue le mélange à cuire,
dans lequel le chocolat mis en oeuvre a subi un traitement d'alcalinisation de sorte que le pH du mélange à cuire soit supérieur à 6,8,
dans lequel on préchauffe le mélange, on remplit des récipients avec ce mélange et l'on cuit le mélange dans un four à air chaud et
dans lequel le flan est préparé sans additif gélifiant ou épaississant autre que les oeufs.

Pour mettre en oeuvre le procédé, on mélange du lait, de la crème, du sucre et avantageusement de la poudre de cacao alcalinisé, dont le pH est environ 8 et dont le but est de renforcer la couleur et le goût du flan, sous agitation.

De préférence, on fait fondre dans une partie de ce mélange du chocolat en petits morceaux, alcalinisé à un pH de 6,8-7,8 environ, puis on incorpore ce prémélange au mélange précédent. On stérilise l'ensemble, puis après refroidissement, on y incorpore de l'oeuf liquide, avantageusement un mélange de jaune d'oeuf et de blanc d'oeuf à prédominance de jaune, et on réchauffe le tout à une température inférieure au point de gélification des oeufs.

On homogénéise avantageusement cette préparation pour flan pour la lisser et on en remplit des récipients individuels. Ces récipients remplis cheminent dans un four à air chaud ou la préparation gélifie par cuisson. Après cuisson, on ferme hermétiquement les récipients par des couvercles, on refroidit les articles et on les emballe.

L'exemple ci-après illustre l'invention. Dans celui-ci, les parties et pourcentages sont en poids, sauf indication contraire.

### Exemple

Dans une première cuve munie d'un agitateur, on mélange du lait pasteurisé contenant 38g/l de matière grasse et 123g/l de matière sèche, de la crème contenant 450g/l de matière grasse et 505g/l de matière sèche, du sucre cristallisé et de la poudre de cacao.

Séparément, dans un fondoir muni d'un agitateur, on fait fondre des morceaux de chocolat en les incorporant dans une partie du mélange de sucre, de crème et de lait provenant de la première cuve, porté à 70° C, pendant 11 min.
On introduit ensuite ce prémélange dans la première cuve maintenue à 15° C.

On fait passer l'ensemble dans un échangeur à plaques où il est maintenu à 127° C pendant 2 min. pour l'hygiéniser.

Après refroidissement à 4°C, on y incorpore un mélange liquide de 86 % de jaune d'oeuf et de 14 % de blanc d'oeuf, puis on porte le tout à 68° C au moyen d'un échangeur à plaques et on l'homogénéise en deux étages d'abord à 75 bar au premier, puis à 25 bar au second.

A 68° C, on remplit des pots en verre avec la base pour flan, puis on cuit les pots pendant 40 min. en four à air chaud avec contrôle de la température, à une température sèche de 160° C et à une température humide de 40° C et sans circulation de l'air.

Après un temps d'attente de 10 min. à la température ambiante on sertit les pots de couvercles, on les refroidit en bain d'eau et on les conditionne par groupes en suremballages.

Les conditions précédentes sont appliquées à la préparation de deux groupes de produits:
Le groupe A, selon l'invention, pour lequel on utilise une poudre de cacao alcalinisée, de pH 8,1, à 10-12 % de matières grasses et un chocolat noir cristallisé, alcalinisé, de pH 7,3, à 33,5 % de matières grasses et
Le groupe B, à titre de comparaison,
   pour lequel on utilise un poudre de cacao classique de pH 6,8, à 20-22 % de matière grasse et un chocolat noir cristallisé, de pH 6,5, à 33 % de matières grasses.
Les proportions des différents ingrédients sont indiquées dans le tableau ci-après.

| **Ingrédient (% du produit fini)** | **A** | **B** |
|---|---|---|
| Lait pasteurisé | 50,53 | 51,61 |
| Crème pasteurisée | 18,49 | 17,41 |
| Oeufs pasteurisés | 10 | 10 |
| Sucre cristallisé | 12,1 | 12,01 |
| Chocolat alcalinisé | 7,4 | - |
| Poudre de cacao alcalinisée | 1,5 | - |
| Chocolat classique | - | 7,47 |
| Poudre de cacao classique | - | 1,5 |
| **pH du mélange** | 6,85 | 6,55 |

Le traitement en four était conçu pour garantir un minimum de 5 semaines de conservation du produit entreposé à température d'au plus 12° C. Dans ces conditions:

Le produit A avait un aspect homogène, une texture lisse, un goût fin de chocolat et une couleur brun foncé.

Le produit B avait un aspect hétérogène, présentait en certains points en contact avec le récipient, des grumeaux et une exudation de sérum, avait un goût de chocolat amer et une couleur brun clair.

## Revendications

1. Procédé de préparation d'un flan au chocolat,
dans lequel on prépare une base de lait, de crème, de sucre et de chocolat, on la traite thermiquement pour l'hygiéniser, on la refroidit et on y mélange des oeufs, ce qui constitue le mélange à cuire,
dans lequel le chocolat mis en oeuvre a subi un traitement d'alcalinisation de sorte que le pH du mélange à cuire soit supérieur à 6,8,
dans lequel on préchauffe le mélange, on remplit des récipients avec ce mélange et l'on cuit le mélange dans un four à air chaud et
dans lequel le flan est préparé sans additif gélifiant ou épaississant autre que les oeufs.

2. Procédé selon la revendication 1, dans lequel le mélange contient un chocolat alcalinisé de pH 6,8 à 7,8 et une poudre de cacao alcalinisée de pH environ 8.

3. Procédé selon la revendication 1, dans lequel on introduit le chocolat sous forme de prémélange en le dissolvant dans un mélange chaud de lait, de crème et de sucre.

4. Procédé selon la revendication 1, dans lequel, après avoir incorporé les oeufs sous forme de liquide, constitué principalement de jaune d'oeuf, au mélange, on l'homogénéise.

5. Procédé selon la revendication 1, dans lequel, après passage au four, on met en attente à la température ambiante les récipients remplis, on ferme hermétiquement les récipients, on les refroidit et on les emballe.

6. Flan au chocolat cuit au four à air chaud ayant des caractéristiques organoleptiques semblables à celles d'un flan au chocolat ménager cuit au bain-marie et dépourvu d'additif épaississant ou gélifiant autre que les oeufs, préparé par le procédé selon l'une des revendications 1 à 5.

## Claims

1. Process for preparing a chocolate baked custard, wherein a base is prepared of milk, cream, sugar and
chocolate, it is heat treated so as to sterilize it, it is cooled and eggs are mixed with it, to constitute the mixture to be cooked,
wherein the chocolate used has been subjected to an alkalinization treatment so that the pH of the mixture to be cooked is above 6.8,
wherein the mixture is preheated, containers are filled with this mixture and the mixture is baked in a hot air oven and
wherein the baked custard is prepared without a gelling or thickening agent other than eggs.

2. Process according to claim 1, wherein the mixture contains an alkalinized chocolate of pH 6.8 to 7.8 and an alkalinized cocoa powder with a pH of approximately 8.

3. Process according to claim 1, wherein the chocolate is introduced in the form of a premix by dissolving it in a mixture of hot milk, cream and sugar.

4. Process according to claim 1 wherein, after having incorporated the eggs in liquid form, consisting mainly of egg yolk, into the mixture, the mixture is homogenized.

5. Process according to claim 1 wherein, after passage through the oven, the filled containers are left to return to ambient temperature, are hermetically sealed, cooled and packaged.

6. Chocolate baked custard baked in a hot air oven, having organoleptic properties similar to those of homemade chocolate custard cooked in a water-bath and free from a gelling or thickening other than eggs, prepared by the process according to one of claims 1 to 5.

## Patentansprüche

1. Verfahren zur Herstellung von Schokoladepudding,
bei dem man eine Grundlage aus Milch, Sahne, Zucker und Schokolade herstellt, sie zur Hygienisierung thermisch behandelt, sie kühlt und ihr Eier beimischt, was die zu kochende Mischung ergibt,
bei dem die verwendete Schokolade einer solchen Alkalisierungsbehandlung unterzogen wurde, dass der pH der zu kochenden Mischung über 6,8 beträgt,
bei dem man die Mischung vorerhitzt, mit dieser Mischung Behälter füllt und die Mischung in einem Heißluftofen kocht und
bei dem der Pudding ohne anderen Gelier- und Verdickungsmittelzusatz als Ei zubereitet wird.

2. Verfahren nach Anspruch 1, bei dem die Mischung eine alkalisierte Schokolade mit einem pH von 6,8 bis 7,8 und ein alkalisiertes Kakaopulver mit einem pH von etwa 8 enthält.

3. Verfahren nach Anspruch 1, bei dem man die Schokolade in Form einer Vormischung einführt, indem man sie in einer heißen Mischung aus Milch, Sahne und Zucker auflöst.

4. Verfahren nach Anspruch 1, bei dem man die Mischung homogenisiert, nachdem ihr die Eier in Form von hauptsächlich aus Eigelb bestehender Flüssigkeit beigemischt wurden.

5. Verfahren nach Anspruch 1, bei dem man die gefüllten Behälter nach Durchgang durch den Ofen bei Raumtemperatur verweilen lässt, die Behälter hermetisch verschließt, sie kühlt und verpackt.

6. Im Heißluftofen gekochter Schokoladepudding, der ähnliche organoleptische Merkmale wie ein im Wasserbad gekochter Haushaltsschokoladepudding besitzt und frei von anderem Verdikkungs- oder Geliermittelzusatz als Ei ist, und der in dem Verfahren nach einem der Ansprüche 1 bis 5 hergestellt wurde.
